# FASCICULE DE BREVET EUROPEEN

(11) **EP 4 028 654 B1**
(45) Date de publication et mention de la délivrance du brevet: **19.03.2025**
(21) Numéro de dépôt: 20780769.4
(22) Date de dépôt: 08.09.2020
(51) Int. Cl.: F01P 7/10, B60K 11/08

(54) **MODULE DE REFROIDISSEMENT POUR VÉHICULE AUTOMOBILE À TURBOMACHINE TANGENTIELLE**
KÜHLMODUL FÜR EIN MOTORFAHRZEUG, DAS EINE TANGENTIALE TURBOMACHINE UMFASST
COOLING MODULE FOR A MOTOR VEHICLE COMPRISING A TANGENTIAL FLOW TURBOMACHINE

(30) Priorité: 10.09.2019 FR 1909951
(43) Date de publication de la demande: 20.07.2022
(73) Titulaire: VALEO SYSTEMES THERMIQUES, 78320 Le Mesnil Saint-Denis (FR)
(72) Inventeur: AZZOUZ, Kamel, 78322 LE MESNIL SAINT DENIS CEDEX (FR); GARNIER, Sébastien, 78322 LE MESNIL SAINT DENIS CEDEX (FR); MAMMERI, Amrid, 78322 LE MESNIL SAINT DENIS CEDEX (FR)
(74) Mandataire: Valeo Systèmes Thermiques
(86) Numéro de dépôt international: PCT/FR2020/051545
(87) Numéro de publication internationale: WO 2021/048493

(56) Documents cités:
- EP-A1- 2 402 574
- DE-A1- 102008 020 310
- DE-A1- 102017 119 098
- DE-A1- 102017 203 858
- FR-A1- 3 078 572
- US-A1- 2018 009 313

## Description

### Domaine technique

L'invention se rapporte à un module de refroidissement pour véhicule automobile, à turbomachine tangentielle. L'invention vise également un véhicule automobile muni d'un tel module de refroidissement.

### Technique antérieure

Les véhicules à moteur, qu'ils soient à combustion ou électriques, ont besoin d'évacuer les calories que génère leur fonctionnement et sont pour cela équipés d'échangeurs de chaleur. Un échangeur de chaleur de véhicule automobile comprend généralement des tubes, dans lesquels un fluide caloporteur est destiné à circuler, notamment un liquide tel que l'eau, et des éléments d'échange de chaleur reliés à ces tubes, souvent désignés par le terme « ailettes » ou « intercalaires ». Les ailettes permettent d'augmenter la surface d'échange entre les tubes et l'air ambiant.

Toutefois, afin d'augmenter encore l'échange de chaleur entre le fluide caloporteur et l'air ambiant, il est fréquent qu'un dispositif de ventilation soit utilisé en sus, pour générer ou accroitre un flux d'air dirigé vers les tubes et les ailettes.

De façon connue, un tel dispositif de ventilation comprend un ventilateur à hélice.

Le flux d'air généré par les pales d'un tel ventilateur est turbulent, notamment en raison de la géométrie circulaire de l'hélice, et n'atteint en général qu'une partie seulement de la surface de l'échangeur de chaleur (zone circulaire de l'échangeur faisant face à l'hélice du ventilateur). L'échange de chaleur ne se fait donc pas de façon homogène sur toute la surface des tubes et des ailettes.

En outre, lorsque la mise en marche du ventilateur ne s'avère pas nécessaire (typiquement lorsque l'échange de chaleur avec de l'air ambiant non accéléré suffit à refroidir le fluide caloporteur circulant dans l'échangeur), les pales obstruent en partie l'écoulement de l'air ambiant vers les tubes et les ailettes, ce qui gêne la circulation d'air vers l'échangeur et limite ainsi l'échange de chaleur avec le fluide caloporteur.

Un tel ventilateur est en outre relativement encombrant, à cause notamment des dimensions nécessaires de l'hélice pour obtenir un refroidissement moteur effectif, ce qui rend long et délicat son intégration dans un véhicule automobile.

Des exemples de dispositif de ventilation pour module de refroidissement de véhicule automobile comprenant une turbomachine tangentielle sont montrés dans les documents DE102008020310A1 et DE102017203858A1.

Le but de l'invention est de remédier au moins partiellement à ces inconvénients.

### Exposé de l'invention

À cet effet, l'invention a pour objet un dispositif de ventilation pour module de refroidissement de véhicule automobile, comprenant :
- au moins une turbomachine tangentielle comprenant une roue à aubes et un moteur pour entraîner en rotation la roue à aubes,
- au moins un cadre formant un logement de réception apte à recevoir la roue à aubes,
- une pluralité de volets montés pivotant par rapport au cadre, la pluralité de volets étant adaptée à sélectivement obturer une ouverture à travers le cadre, et
- un actionneur pour commander le pivotement de la pluralité de volets, caractérisé en ce que;
- ledit actionneur comprenant :
   - un moteur électrique dont l'arbre de sortie entraine en rotation l'un parmi la pluralité de volets ;
   - au moins une bielle reliant ledit un volet à l'autre ou aux autres volet/s de la pluralité de volets, de telle sorte que la rotation dudit un volet soit transmise à l'autre ou aux autres volet/s; et en ce que;
   - dans la position d'obturation de l'ouverture par les volets, les volets forment une surface sensiblement plane formant, avec une surface d'entrée d'air normale au flux d'air en entrée du dispositif de ventilation, un angle compris entre 5 et 20°, de préférence sensiblement égal à 12,5°.

Ainsi, avantageusement, on met en œuvre au moins une turbomachine tangentielle qui permet d'obtenir un flux d'air mieux réparti sur un ou plusieurs échangeurs de forme générale rectangulaire.

En outre, la présence de volets permettant de sélectivement obturer une ouverture dans le cadre, permet d'augmenter le flux d'air traversant le ou les échangeurs de chaleur, lorsque la ou les turbomachines sont éteintes et que le flux d'air est produit par la vitesse du véhicule se déplaçant.

Enfin, l'actionneur décrit ci-dessus est simple à réaliser et particulièrement robuste. Il permet un commandement synchronisé de la rotation des volets.

De préférence, le module de refroidissement comporte une ou plusieurs des caractéristiques suivantes, prises seules ou en combinaison :
- chaque volet présente à une première extrémité une came, les cames des volets étant reliées ensemble par ladite au moins une bielle ;
- chaque volet présente à une deuxième extrémité un téton reçu pivotant dans un logement de réception dans le cadre ;
- les volets sont tubulaires, les volets présentant une face sensiblement plane et une face opposée courbe, les faces sensiblement plane des volets étant destinées à être alignées dans la position d'obturation de l'ouverture à travers le cadre, par les volets ;
- les volets présentent un nervure longitudinale sur un premier côté longitudinal et une rainure longitudinale sur un deuxième côté longitudinale, la rainure et la nervure étant de formes complémentaires ;
- les volets sont configurés pour pouvoir pivoter sur une plage angulaire d'amplitude comprise entre 90° et 110°, de préférence d'amplitude égale à 102,5° ; et
- chaque volet présente un joint d'étanchéité, notamment surmoulé sur le volet ;
- le dispositif de ventilation comprend en outre une grille au niveau d'une sortie d'air formée par le cadre.

Selon un autre aspect, il est décrit un module de refroidissement pour véhicule automobile, en particulier pour véhicule automobile à moteur électrique, comprenant au moins un échangeur thermique et au moins un dispositif de ventilation tel que décrit ci-avant dans toutes ses combinaisons, apte à créer un flux d'air au contact du au moins un échangeur thermique.

Selon un autre aspect, il est proposé un véhicule automobile, comprenant une carrosserie et un module de refroidissement tel que décrit précédemment, la carrosserie définissant au moins une baie de refroidissement, le module de refroidissement étant disposé en regard de la au moins une baie de refroidissement.

### Brève description des dessins

D'autres caractéristiques, détails et avantages de l'invention apparaîtront à la lecture de la description détaillée ci-après, et à l'analyse des dessins annexés, sur lesquels :
[Fig. 1] représente schématiquement la partie avant d'un véhicule automobile, vu de côté ;
[Fig. 2] est une vue schématique en perspective d'un module de refroidissement pouvant être mis en œuvre dans le véhicule automobile de la figure 1, dont les volets ont été retirés ;
[Fig. 3] est une vue de côté du module de refroidissement de la figure 2 ;
[Fig. 4] est une analogue à la figure 2, dont les volets sont en position de fermeture d'une ouverture dans le boîtier du module de refroidissement ;
[Fig. 5] est une éclatée d'un détail du module de refroidissement des figures 2 à 4 ;
[Fig. 6] est une éclatée d'un autre détail du module de refroidissement des figures 2 à 4 ;
[Fig. 7] est une vue en coupe longitudinale d'une partie du module de refroidissement des figures 2 à 4 ; et
[Fig. 8] est une vue en coupe d'un volet du module de refroidissement des figures 2 à 4.

### Description de modes de réalisation

Dans la suite de la description, les éléments identiques ou de fonction identique portent le même signe de référence. À fin de concision de la présente description, ces éléments ne sont pas décrits en détails dans chaque mode de réalisation. Au contraire, seules les différences entre les variantes de réalisation sont décrites en détails.

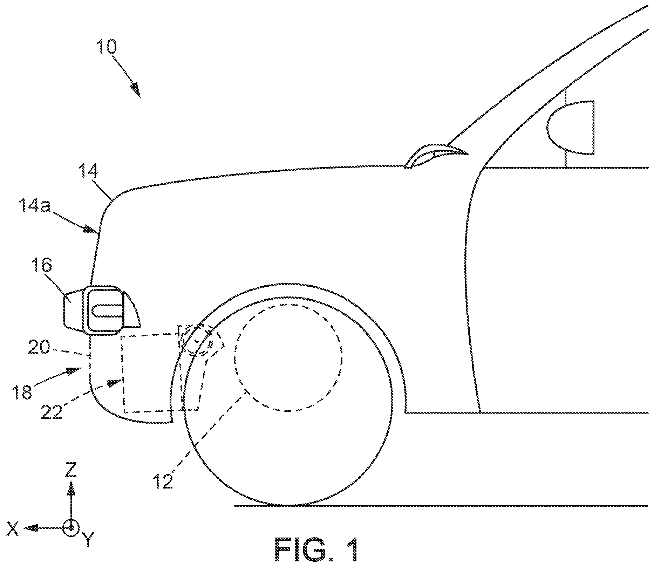

La figure 1 illustre de manière schématique la partie avant d'un véhicule automobile 10 à moteur 12. Le véhicule 10 comporte notamment une carrosserie 14 et un pare-chocs 16 portés par un châssis (non représenté) du véhicule automobile 10. La carrosserie 14 définit une baie de refroidissement 18, c'est-à-dire une ouverture à travers la carrosserie 14. La baie de refroidissement 18 peut être unique comme dans l'exemple illustré. Alternativement cependant, la carrosserie 14 peut définir une pluralité de baies de refroidissement. Ici, la baie de refroidissement 18 se trouve en partie basse de la face avant 14a de la carrosserie 14. Dans l'exemple illustré, la baie de refroidissement 18 est située sous le pare-chocs 16. Une grille 20 peut être disposée dans la baie de refroidissement 18 pour éviter que des projectiles puissent traverser la baie de refroidissement 18. Un module de refroidissement 22 est disposé en vis-à-vis de la baie de refroidissement 18. La grille 20 permet notamment de protéger ce module de refroidissement 22.

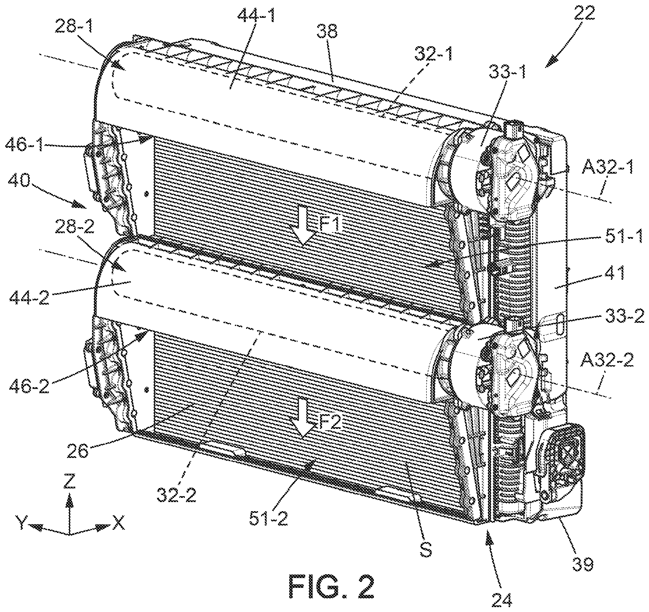

Le module de refroidissement 22 est plus nettement visible sur les figures 2 à 4.

Le module de refroidissement 22 comprend un dispositif de ventilation 24 associé à au moins un échangeur thermique 26.

Comme il ressort des figures, le dispositif de ventilation 24 comprend au moins un ventilateur tangentiel, ou plus généralement une turbomachine tangentielle, qui aspire un flux d'air au contact de chaleur ou des échangeurs de chaleur 26. Sur l'exemple illustré, le module de refroidissement 24 comprend deux turbomachines tangentielles 28-1, 28-2, détaillées ci-après.

Tel qu'illustré, le module de refroidissement 22 comporte essentiellement un boîtier ou cadre 30 formant un canal interne d'air. Le cadre 30 permet de loger au moins une turbomachine tangentielle. Une partie arrière du cadre 30 forme notamment ici la volute 30-1, 30-2 d'une turbomachine tangentielle 28-1, 28-2. Le ou les échangeurs thermiques 26 est/sont disposé/s dans le canal interne d'air.

Chaque turbomachine tangentielle 28-1, 28-2 comprend un rotor 32-1, 32-2. Le rotor est ici constitué d'une turbine 32-1, 32-2, plus précisément d'une hélice tangentielle ou roue à aubes. Chaque turbine 32-1, 32-2 a une forme cylindrique. Chaque turbine 32-1, 32-2 comporte avantageusement plusieurs étages de pales (ou aubes). Chaque turbine 32-1, 32-2 est montée rotative autour d'un axe de rotation A32-1, A32-2 associé. Chaque turbine 32-1, 32-2 est entrainée en rotation par un moteur 33-1, 33-2 associé.

Sur la figure 2, l'ensemble des échangeurs thermiques 26 délimitent une surface S, appelée surface de travail, dont une section est sensiblement rectangulaire dans un plan (Y, Z).

De préférence, la direction Y correspond à une direction horizontale, de préférence encore transversale, tandis que la direction Z correspond à une direction verticale, quand le module est installé dans le véhicule automobile.

La surface S est délimitée par deux bords d'extrémité opposés 38, 39 s'étendant selon la direction Y, dite longueur, et par deux autres bords d'extrémité opposés 40, 41, selon la direction Z, dite hauteur.

La surface S correspond au rectangle défini par l'échangeur 26, ou si plusieurs échangeurs sont présents, par le plus grand échangeur thermique. Néanmoins, il est également possible de juxtaposer plusieurs échangeurs verticalement et/ou horizontalement, auquel cas la hauteur de la surface S est la somme des hauteurs des échangeurs juxtaposés verticalement (superposés), et la longueur de la surface S est la somme des longueurs des échangeurs juxtaposés horizontalement.

Les première et deuxième turbomachines 28-1 et 28-2 sont montées parallèlement l'une à l'autre, c'est-à-dire que le flux d'air F1 éjecté de la première turbine 32-1 de la première turbomachine 28-1 est distinct du flux d'air F2 éjecté de la deuxième turbine 32-2 de la deuxième turbomachine 28-2. En d'autres termes, le flux d'air F1 éjecté de la première turbine 32-1 ne traverse pas la deuxième turbine 32-2 et réciproquement.

Sur les figures, les axes de rotation A32-1, A32-2 sont parallèles à la direction Y. Les deux turbines 32-1, 32-2 sont ainsi montées horizontalement, en l'espèce selon une direction transversale. Alternativement, les axes de rotation A32-1, A32-2 peuvent être verticaux, c'est-à-dire parallèles à l'axe Z.

Comme également visible sur les figures, la volute 30-1 de la première turbomachine 28-1 comprend une première portion de guidage 44-1 d'air autour de la première turbomachine 32-1 jusqu'à une première sortie 46-1 de l'air hors du module 22. De manière connue, la première portion de guidage d'air 44-1 comprend avantageusement une paroi en forme de spirale tronquée.

De manière analogue, la volute 30-2 de la deuxième turbomachine 28-2 comprend une deuxième portion de guidage 44-2 d'air autour de la deuxième turbomachine 32-2 jusqu'à une sortie de l'air hors du module 22, référencée 46-2. La deuxième portion de guidage 44-2 comprend avantageusement une paroi en forme de spirale tronquée.

Selon le mode de réalisation illustré, les deux sorties 46-1, 46-2 sont disposées en regard l'une de l'autre, orientées sensiblement dans un même sens. Ceci permet de réduire les ondes acoustiques générées par le module de refroidissement 22, par rapport à une configuration où les deux sorties se font face et sont orientées dans des sens opposés.

La configuration illustrée assure que la répartition d'air d'un premier flux d'air F1 issu de la première turbomachine 28-1 via la première sortie 46-1 associée est sensiblement la même direction et en particulier dans le même sens que la répartition d'un deuxième flux d'air F2 issu de la deuxième turbomachine 28-2 via la deuxième sortie 46-2 associée. En l'espèce, les premier et deuxième flux d'air F1 et F2 sont sensiblement verticaux, et orientés vers le bas.

Ainsi, quand le véhicule se trouve dans un environnement humide voire mouillé, comme en cas de pluie ou de passage à gué, la turbomachine 28-1, 28-2 est protégée, puisque l'eau ne peut pas être stockée dans la volute 30-1, 30-2 mais au contraire est évacuée par la sortie 46-1, 46-2. De ce fait, toute submersion du module de refroidissement 22 est évitée.

Avantageusement, une grille (non représentée sur les figures) est fixée à chacune des sorties 46-1, 46-2. Une telle grille peut notamment permettre d'éviter que des projections pénètrent dans le logement recevant la turbine 32-1, 32-2 et endommagent cette turbine 32-1, 32-2.

Comme il ressort également des figures, l'axe de rotation A32-1 de la première turbomachine 28-1 est disposé sensiblement en face du bord longitudinal 38 supérieure de la surface S et l'axe de rotation A32-2 de la deuxième turbomachine 28-2 est disposé au milieu de la hauteur de la surface S.

Néanmoins, selon la configuration des échangeurs thermiques et/ou la puissance de refroidissement requise pour chaque échangeur, il est possible de positionner les turbomachines 28-1, 28-2 de sorte à les dédier à des échangeurs 26 respectifs. D'autres positions relatives de turbomachines 28-1, 28-2 sont également possibles.

Avantageusement, l'axe de rotation A32-2 de la deuxième turbomachine 28-2 est disposé dans une zone comprise entre un cinquième et quatre cinquième de la hauteur, de préférence entre un tiers et deux tiers de ladite hauteur, de la surface de travail S.

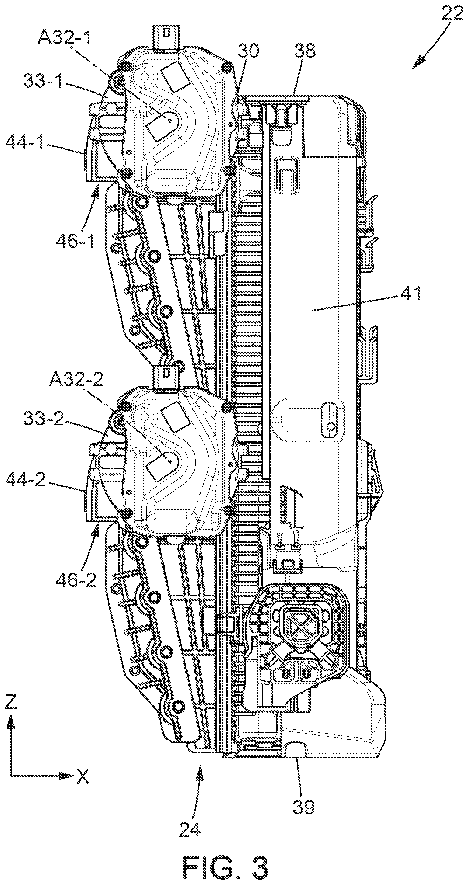

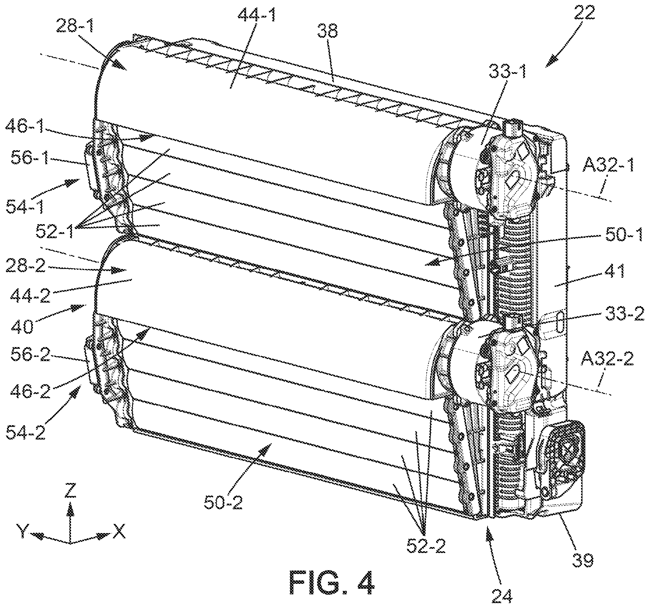

Comme illustré sur les figures 3 et 4, le module 22 est muni de moyens de guidage d'air 50-1, 50-2 associés à chaque turbomachine 28-1, 28-2 (ces moyens sont retirés sur la figure 2 à fin de visibilité de l'échangeur 26).

Chaque moyen de guidage d'air 50-1, 50-2 comprend une pluralité de volets 52-1, 52-2. Chaque pluralité de volets 52-1, 52-2 est montée pivotante entre une position de fermeture, illustrée à la figure 4, dans laquelle les volets 52-1, 52-2 obturent une ouverture 51-1, 51-2 respective formée par le cadre 30 du module de refroidissement 22, et au moins une position d'ouverture, dans laquelle les volets 52-1, 52-2 permettent à au moins une partie du flux d'air de traverser l'ouverture 51-1, 51-2 associée. Dans la position de fermeture des volets 52-1, 52-2, ceux-ci permettent de diriger le flux d'air créé vers la turbomachine associée 28-1, 28-2. Au contraire, une position ouverte des volets 52-1, 52-2, atteinte généralement alors que la turbomachine 28-1, 28-2 associée est éteinte, permet de diriger au moins une partie du flux d'air créé par exemple par la vitesse du véhicule sur lequel le module de refroidissement 22 est monté, à travers une ouverture respective 51-1, 51-2 dans le cadre 30, sans passer par la turbomachine associée 28-1, 28-2. On « dérive » ainsi le flux d'air de la turbomachine 28-1, 28-2.

La position d'ouverture est particulièrement avantageuse quand le véhicule roule à grande vitesse, auquel cas il est possible de mettre les turbomachines 28-1, 28-2 à l'arrêt.

Le nombre de volets 52-1 associés à la première turbomachine 28-1 peut être identique ou au contraire différent du nombre de volets 52-2 associés à la deuxième turbomachine 28-2, selon la position respective des turbomachines 28-1, 28-2, notamment.

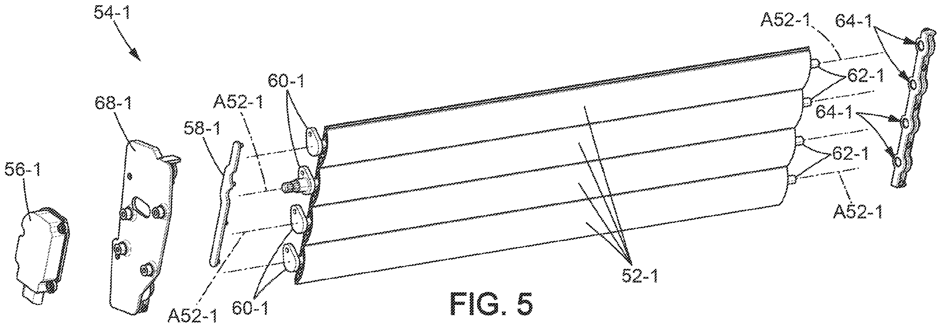

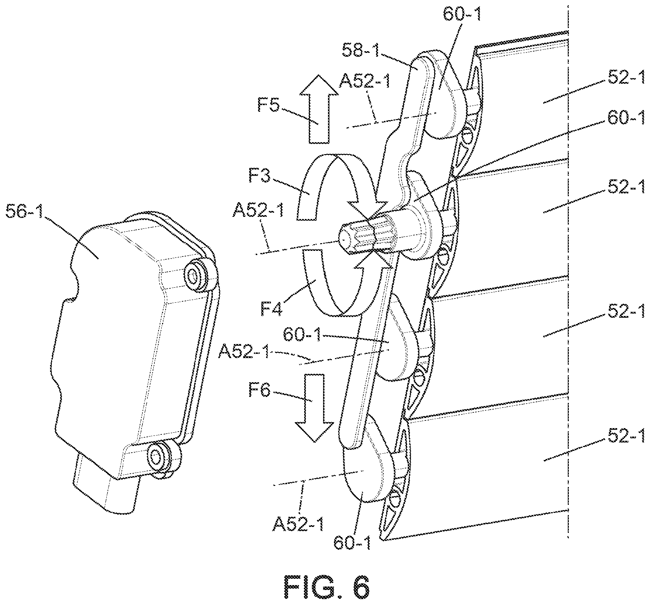

Chaque pluralité de volets 52-1, 52-2 est associée à un actionneur 54-1, 54-2 respectif. Un actionneur 54-1 est décrit plus en détail ci-après, en regard des figures 5 et 6, étant entendu que l'actionneur 54-2 peut être identique.

Comme illustré sur les figures 5 et 6, l'actionneur 54-1 comprend tout d'abord un moteur électrique 56-1 dont l'arbre de sortie entraîne en rotation un premier volet 52-1. L'actionneur 54-1 comprend également une bielle 58-1, la bielle 58-1 reliant ensemble le premier volet 52-1, entrainé en rotation par l'arbre de sortie du moteur électrique 56-1, aux autres volets 52-1 de la pluralité de volets 52-1, de telle sorte que la rotation du premier volet 52-1 soit transmise aux autres volets 52-1 de la pluralité de volets 52-1.

Plus précisément, chaque volet 52-1 comprend, à une première extrémité, une came 60-1. L'axe de chaque came 60-1 correspond à l'axe A52-1 de rotation du volet 52-1 associé. Les cames 60-1 associés aux différents volets 52-1 sont reliées ensemble par la bielle 58-1. Par exemple, la bielle 58-1 comprend un ergot associé à chaque came 60-1, reçu dans un logement complémentaire formé dans la came 60-1, de telle sorte que l'ergot reçu dans le logement puisse pivoter par rapport la came 60-1. La came 60-1 associée au premier volet 52-1 est entrainée en rotation par l'arbre de sortie du moteur électrique 56-1, soit directement, soit par l'intermédiaire d'un engrenage réducteur. Le point de fixation de la bielle 58-1 sur chaque came 60-1 est décalé par rapport à l'axe A52-1 de rotation du volet 52-1 associé.

Comme visible sur la figure 5 notamment, l'extrémité opposée à la came 60-1 de chaque volet 52-1 présente ici un téton 62-1 reçu dans un logement 64-1 complémentaire formé sur un premier montant 66-1 de l'actionneur 54-1. Le premier montant 66-1 peut être formé en tout ou partie par le boîtier 30 du module de refroidissement 22. Le téton 62-1 et le logement 64-1 complémentaire sont par exemple cylindriques, de section circulaire.

Les cames 60-1 sont également reçues dans des logements complémentaires, pour guider leur rotation autour de l'axe A52-1 de rotation du volet 52-1 associé. Les logements sont formés dans un deuxième montant 68-1. Le deuxième montant 68-1 peut être formé en tout ou partie par le boîtier 30 du module de refroidissement 22.

Comme illustré schématiquement sur la figure 6, en fonction du sens de rotation du moteur 56-1, on provoque la rotation F3, F4 du premier volet 52-1 autour de son axe de rotation A52-1. La rotation F3, F4 de ce premier volet 52-1 provoque la rotation de la came 60-1 associée, qui engendre à son tour le déplacement F5, F6, ici vertical, de la bielle 58-1. Le déplacement F5, F6 de la bielle 58-1 provoque la rotation des autres cames 60-1 et, par conséquent, des autres volets 52-1 de la pluralité de volets 52-1.

Afin d'améliorer l'étanchéité entre les volets 52-1 en position de fermeture, un joint - non illustré sur les figures - peut être surmoulé sur les volets. Alternativement ou au surplus, chaque volet 52-1 présente une nervure 70-1 le long d'un premier côté longitudinal et une rainure 72-1 de forme complémentaire à la nervure 70-1, le long d'un deuxième côté longitudinal, de telle sorte que la nervure 70-1 d'un premier volet 52-1 est reçue dans la rainure 72-1 d'un deuxième volet 52-1 voisin en position de fermeture des volets 52-1.

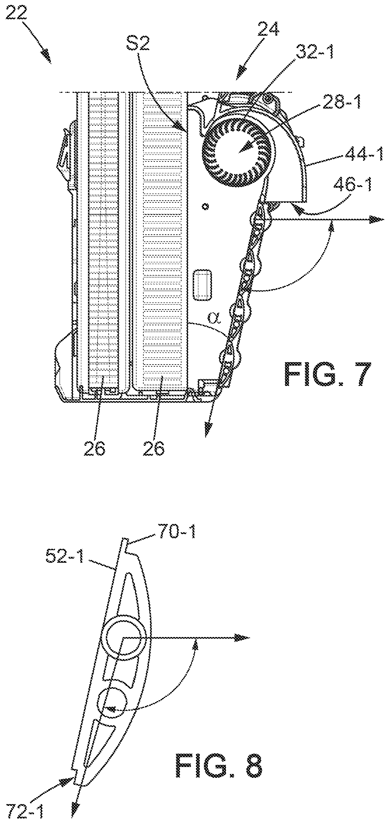

Comme illustré en particulier sur la figure 8, chaque volet 52-1 peut être tubulaire. De préférence, la face d'un volet 52-1 destinée à être orientée vers le ou les échangeur/s thermique/s 26 est sensiblement plane. Les faces planes des volets 52-1 sont alignées dans la position de fermeture des volets 52-1, pour former une surface sensiblement plane de guidage du flux d'air. Ceci permet de limiter les pertes de charges du flux d'air. La face opposée des volets 52-1 est de préférence courbe.

En outre, les figures 7 et 8 illustrent également que chaque volet 52-1, 52-2 peut être pivoté sur une plage angulaire d'amplitude comprise entre 90° et 110 °, de préférence d'amplitude 102,5 °. L'une des deux positions extrémales des volets 52-1 correspond ici à la position de fermeture des volets 52-1, dans laquelle les faces planes des volets 52-1 alignées forment un angle α compris entre 5° et 20 °, de préférence sensiblement égal à 12,5 ° avec une surface S2 d'entrée d'air, normale au flux d'air en entrée du dispositif de ventilation 24. L'autre des deux positions extrémales des volets 52-1 correspond à une position des volets 52-1 dans laquelle les surfaces planes des volets 52-1 s'étendent sensiblement horizontalement, c'est-à-dire sensiblement parallèlement au flux d'air en entrée du dispositif de ventilation 24. Dans cette position, on minimise la résistance des volets 52-1, 52-2 au flux d'air traversant l'ouverture 51-1, 51-2 associée.

L'invention ne se limite pas au seul exemple décrit ci-avant. Au contraire, l'invention est susceptible de nombreuses variantes accessibles à l'homme de l'art telles que définies par les revendications annexées.

Notamment, dans l'exemple illustré, le dispositif de ventilation comporte deux turbomachines. Alternativement, le dispositif de ventilation peut comporter une seule turbomachine ou plus de deux turbomachines.

Également, dans l'exemple illustré, les volets pivotent autour d'un axe parallèle à l'axe de rotation des turbomachines. Alternativement, cependant, le ou les volets peut/peuvent pivoter autour d'un axe perpendiculaire à l'axe de rotation de la ou des turbomachines.

## Revendications

1. Dispositif de ventilation (24) pour module de refroidissement (22) de véhicule automobile (10), comprenant :
- au moins une turbomachine tangentielle (28-1 ; 28-2) comprenant une roue à aubes (32-1 ; 32-2) et un moteur (33-1 ; 33-2) pour entraîner en rotation la roue à aubes (32-1 ; 32-2),
- au moins un cadre (30) formant un logement (30-1 ; 30-2) de réception apte à recevoir la roue à aubes (32-1 ; 32-2),
- une pluralité de volets (52-1 ; 52-2) montés pivotant par rapport au cadre (30), la pluralité de volets (52-1 ; 52-2) étant adaptée à sélectivement obturer une ouverture (51-1 ; 51-2) à travers le cadre (30), et
- un actionneur (54-1 ; 54-2) pour commander le pivotement de la pluralité de volets (52-1 ; 52-2), **caractérisé en ce que**;
ledit actionneur (54-1 ; 54-2) comprenant :
- un moteur électrique (56-1 ; 56-2) dont l'arbre de sortie entraine en rotation l'un parmi la pluralité de volets (52-1 ; 52-2) ;
- au moins une bielle (58-1) reliant ledit un volet (52-1 ; 52-2) à l'autre ou aux autres volet/s (52-1 ; 52-2) de la pluralité de volets (52-1 ; 52-2), de telle sorte que la rotation dudit un volet (52-1 ; 52-2) soit transmise à l'autre ou aux autres volet/s (52-1 ; 52-2),
et **en ce que** dans la position d'obturation de l'ouverture (51-1 ; 51-2) par les volets (52-1 ; 52-2), les volets (52-1 ; 52-2) forment une surface sensiblement plane formant, avec une surface (S2) d'entrée d'air normale au flux d'air en entrée du dispositif de ventilation (22), un angle (α) compris entre 5 et 20°, de préférence sensiblement égal à 12,5°.

2. Dispositif de ventilation selon la revendication 1, dans lequel chaque volet (52-1 ; 52-2) présente à une première extrémité une came (60-1), les cames (60-1) des volets (52-1 ; 52-2) étant reliées ensemble par ladite au moins une bielle (58-1).

3. Dispositif de ventilation selon la revendication 2, dans lequel chaque volet (52-1 ; 52-2) présente à une deuxième extrémité un téton (62-1) reçu pivotant dans un logement de réception (64-1) dans le cadre (30).

4. Dispositif de ventilation selon l'une des revendications 1 à 3, dans lequel les volets (52-1 ; 52-2) sont tubulaires, les volets (52-1 ; 52-2) présentant une face sensiblement plane et une face opposée courbe, les faces sensiblement plane des volets (52-1 ; 52-2) étant destinées à être alignées dans la position d'obturation de l'ouverture (51-1 ; 51-2) à travers le cadre (30), par les volets (52-1 ; 52-2).

5. Dispositif de ventilation selon la revendication 4, dans lequel les volets (52-1 ; 52-2) présentent un nervure longitudinale (70-1) sur un premier côté longitudinal et une rainure (72-1) longitudinale sur un deuxième côté longitudinale, la rainure (70-1) et la nervure (72-1) étant de formes complémentaires.

6. Dispositif de ventilation selon l'une quelconque des revendications précédentes, dans lequel les volets (52-1 ; 52-2) sont configurés pour pouvoir pivoter sur une plage angulaire d'amplitude comprise entre 90° et 110°, de préférence d'amplitude égale à 102,5°.

7. Dispositif de ventilation selon l'une quelconque des revendications précédentes, dans lequel chaque volet (52-1 ; 52-2) présente un joint d'étanchéité, notamment surmoulé sur le volet (52-1 ; 52-2).

8. Dispositif de ventilation selon l'une quelconque des revendications précédentes, comprenant en outre une grille au niveau d'une sortie d'air (46-1 ; 46-2) formée par le cadre (30).

9. Module de refroidissement (22) pour véhicule automobile (10), en particulier pour véhicule automobile à moteur électrique, comprenant au moins un échangeur thermique (26) et au moins un dispositif de ventilation (24) selon l'une quelconque des revendications 1 à 8, apte à créer un flux d'air au contact du au moins un échangeur thermique (26).

## Patentansprüche

1. Belüftungsvorrichtung (24) für ein Kühlmodul (22) eines Kraftfahrzeugs (10), welche umfasst:
- mindestens eine tangentiale Turbomaschine (28-1; 28-2), die ein Schaufelrad (32-1; 32-2) und einen Motor (33-**1;** 33-2), um das Schaufelrad (32-1; 32-2) drehend anzutreiben, umfasst,
- mindestens einen Rahmen (30), der einen Aufnahmeraum (30-1; 30-2) bildet, der geeignet ist, das Schaufelrad (32-1; 32-2) aufzunehmen,
- mehrere Klappen (52-1; 52-2), die bezüglich des Rahmens (30) schwenkbar gelagert sind, wobei die mehreren Klappen (52-1; 52-2) dazu eingerichtet sind, eine Öffnung (51-1; 51-2) im Rahmen (30) selektiv zu verschließen, und
- einen Stellantrieb (54-1; 54-2) zum Steuern der Schwenkung der mehreren Klappen (52-1; 52-2), **dadurch gekennzeichnet, dass**:
der Stellantrieb (54-1; 54-2) umfasst:
- einen Elektromotor (56-1; 56-2), dessen Abtriebswelle eine von den mehreren Klappen (52-1; 52-2) drehend antreibt;
- mindestens eine Schubstange (58-1) welche die eine Klappe (52-1; 52-2) mit der anderen oder den anderen Klappe/n (52-1; 52-2) von den mehreren Klappen (52-1; 52-2) verbindet, derart, dass die Drehung der einen Klappe (52-1; 52-2) auf die andere oder die anderen Klappe/n (52-1; 52-2) übertragen wird,
und dadurch, dass in der Position des Verschließens der Öffnung (51-1; 51-2) durch die Klappen (52-1; 52-2) die Klappen (52-1; 52-2) eine im Wesentlichen ebene Fläche bilden, die mit einer zu dem Luftstrom am Einlass der Belüftungsvorrichtung (22) senkrechten Lufteintrittsfläche (S2) einen Winkel (α) zwischen 5 und 20° bildet, der vorzugsweise im Wesentlichen gleich 12,5° ist.

2. Belüftungsvorrichtung nach Anspruch 1, wobei jede Klappe (52-1; 52-2) an einem ersten Ende einen Nocken (60-1) aufweist, wobei die Nocken (60-1) der Klappen (52-1; 52-2) durch die mindestens eine Schubstange (58-1) miteinander verbunden sind.

3. Belüftungsvorrichtung nach Anspruch 2, wobei jede Klappe (52-1; 52-2) an einem zweiten Ende einen Ansatz (62-1) aufweist, der in einem Aufnahmeraum (64-1) im Rahmen (30) schwenkbar aufgenommen ist.

4. Belüftungsvorrichtung nach einem der Ansprüche 1 bis 3, wobei die Klappen (52-1; 52-2) rohrförmig sind, wobei die Klappen (52-1; 52-2) eine im Wesentlichen ebene Seite und eine gegenüberliegende gekrümmt Seite aufweisen, wobei die im Wesentlichen ebenen Seiten der Klappen (52-1; 52-2) dazu bestimmt sind, in der Position des Verschließens der Öffnung (51-1; 51-2) im Rahmen (30) durch die Klappen (52-1; 52-2) zu fluchten.

5. Belüftungsvorrichtung nach Anspruch 4, wobei die Klappen (52-1; 52-2) eine Längsrippe (70-1) an einer ersten Längskante und eine Längsnut (72-1) an einer zweiten Längskante aufweisen, wobei die Nut (70-1) und die Rippe (72-1) komplementäre Formen aufweisen.

6. Belüftungsvorrichtung nach einem der vorhergehenden Ansprüche, wobei die Klappen (52-1; 52-2) dafür ausgebildet sind, über einen Winkelbereich mit einer Amplitude zwischen 90° und 110°, vorzugsweise mit einer Amplitude von 102,5°, schwenken zu können.

7. Belüftungsvorrichtung nach einem der vorhergehenden Ansprüche, wobei jede Klappe (52-1; 52-2) eine Dichtung aufweist, die vorzugsweise auf die Klappe (52-1; 52-2) aufgeformt ist.

8. Belüftungsvorrichtung nach einem der vorhergehenden Ansprüche, welche außerdem ein Gitter an einem Luftauslass (46-1; 46-2) umfasst, der von dem Rahmen (30) gebildet wird.

9. Kühlmodul (22) für ein Kraftfahrzeug (10), insbesondere für ein Kraftfahrzeug mit Elektromotor, welches mindestens einen Wärmetauscher (26) und mindestens eine Belüftungsvorrichtung (24) nach einem der Ansprüche 1 bis 8, die geeignet ist, einen Luftstrom in Kontakt mit dem mindestens einen Wärmetauscher (26) zu erzeugen, umfasst.

## Claims

1. Ventilation device (24) for a cooling module (22) for a motor vehicle (10), comprising:
- at least one tangential-flow turbomachine (28-1; 28-2) comprising a bladed wheel (32-1; 32-2) and a motor (33-1; 33-2) for driving the rotation of the bladed wheel (32-1; 32-2),
- at least one frame (30) forming a receiving housing (30-1; 30-2) able to accommodate the bladed wheel (32-1; 32-2),
- a plurality of shutters (52-1; 52-2) mounted with the ability to pivot with respect to the frame (30), the plurality of shutters (52-1; 52-2) being designed to selectively block off an opening (51-1; 51-2) through the frame (30), and
- an actuator (54-1; 54-2) to bring about the pivoting of the plurality of shutters (52-1; 52-2), **characterized in that**;
said actuator (54-1; 54-2) comprising:
- an electric motor (56-1; 56-2) of which the output shaft drives the rotation of one of the plurality of shutters (52-1; 52-2);
- at least one connecting rod (58-1) connecting said one shutter (52-1; 52-2) to the other shutter(s) (52-1; 52-2) of the plurality of shutters (52-1; 52-2), so that the rotation of said one shutter (52-1; 52-2) is transmitted to the other shutter(s) (52-1; 52-2),
and **in that**, in the position in which the opening (51-1; 51-2) is blocked off by the shutters (52-1; 52-2), the shutters (52-1; 52-2) form a substantially planar surface which, with an air inlet surface (S2) normal to the air flow entering the ventilation device (22), forms an angle (α) of between 5 and 20°, preferably substantially equal to 12.5°.

2. Ventilation device according to Claim 1, wherein each shutter (52-1; 52-2) has, at a first end, a cam (60-1), the cams (60-1) of the shutters (52-1; 52-2) being connected to one another by said at least one connecting rod (58-1).

3. Ventilation device according to Claim 2, wherein each shutter (52-1; 52-2) has, at a second end, a spigot (62-1) housed with the ability to pivot in a receiving housing (64-1) in the frame (30).

4. Ventilation device according to one of Claims 1 to 3, wherein the shutters (52-1; 52-2) are tubular, the shutters (52-1; 52-2) having a substantially planar face and a curved opposite face, the substantially planar faces of the shutters (52-1; 52-2) being intended to be aligned in the position in which the shutters (52-1; 52-2) block off the opening (51-1; 51-2) through the frame (30).

5. Ventilation device according to Claim 4, wherein the shutters (52-1; 52-2) have a longitudinal rib (70-1) on a first longitudinal side and a longitudinal groove (72-1) on a second longitudinal side, the groove (70-1) and the rib (72-1) having complementing shapes.

6. Ventilation device according to any one of the preceding claims, wherein the shutters (52-1; 52-2) are configured to be able to pivot through an angular range of amplitude of between 90° and 110°, preferably of amplitude equal to 102.5°.

7. Ventilation device according to any one of the preceding claims, wherein each shutter (52-1; 52-2) has a seal, notably overmoulded on the shutter (52-1; 52-2).

8. Ventilation device according to any one of the preceding claims, further comprising a grille at an air outlet (46-1; 46-2) formed by the frame (30).

9. Cooling module (22) for a motor vehicle (10), particularly for a motor vehicle with an electric motor, comprising at least one heat exchanger (26) and at least one ventilation device (24) according to any one of Claims 1 to 8 and able to create a flow of air in contact with the at least one heat exchanger (26).
